# EUROPEAN PATENT APPLICATION

(11) **EP 2 785 003 A1**
(43) Date of publication of application: **01.10.2014**
(21) Application number: 13161615.3
(22) Date of filing: 28.03.2013
(51) Int. Cl.: H04L 29/06, H04W 4/22

(54) **Methods, apparatuses and computer program products enabling to improve public warning systems**

(71) Applicant: Nokia Solutions and Networks Oy, 02610 Espoo (FI)
(72) Inventor: Horn, Guenther, 80331 Munich (DE); Jerichow, Anja, 81735 Munich (DE)
(74) Representative: Borgström, Markus

(57) **Abstract**

The present invention proposes computer program claims, methods and apparatuses enabling to improve public warning systems, PWS, as an example of message systems deployed in a communication network. According to an aspect thereof, related to a terminal UE, there is provided an apparatus, which comprises a control unit (42), and a memory unit (41) connected to the control unit, wherein the control unit is configured to obtain (S22) information (PSI_1, PSI-2, PSI_3) on a status of a message system (PWS) deployed within at least one network (2) in which the apparatus (4) is enabled to communicate, receive (S21) a message from the message system within said at least one network, and process (S23-S27) said message dependent on the information on the status of the message system. Corresponding methods and computer program products are likewise encompassed.

## Description

### Field of the invention

The present invention relates to methods, apparatuses and computer program products enabling to improve public warning systems (hereinafter PWS). Particularly, the invention is applicable for any kind of PWS established within communication networks such as GSM, UMTS, LTE, or the like, within which a user may move (or roam) using his terminal.

### Background

Mobile data transmission and data services deployed in mobile communication networks are the foundation of a growing set of uses. One such use is to provide mobile users access to public warning systems.

The present invention relates to such Public Warning System (PWS), e.g. as specified in 3GPP. A PWS is in general used for disaster situations (earthquakes, tsunamis, storms, etc), in which users are warned via means allowing massive distribution, (e.g. television, radio, horns).

3GPP defines requirements for PWS architecture in e.g. TS 22.268, by which a regulator or public safety authority can send a warning message to the UE over a cellular broadcast service as specified in TS 23.041. PWS as used herein is intended to involve, as example, all known cellular public warning systems, such as ETWS, CMAS, KPAS, EU Alert, or any other national or multi-national or international public warning system currently in use or in future development.

PWS as defined in 3GPP sends warning messages over an unsecure channel using the Cell Broadcast Service (CBS) (cf. e.g. TS 23.041). It is thus vulnerable to attacks in which a forged warning message is distributed, for example in an attempt to create panic among the population.

In order to mitigate such risks, security mechanisms, namely authentication of the sender and integrity of the warning message, by means of a digital signature are necessary as specified in the PWS requirements, TS 22.268. Thus, a public key must be available to the UE, such that it can verify the signed warning message. TR33.869 describes different solutions for protecting the distribution of this public key: the NAS-based, the GBA-based and the certificate-based approach. For details on these approaches the reader is referred to TR 33.869.

When PWS security is in use, legitimate sources of warning messages are expected to sign those. Thus, UE would typically discard unsigned warning messages, just like they would do with warning message bearing an invalid signature.

PWS is already in use in some countries, but currently without security. This is in particular the case, as authorities managing and using PWS in said countries are not interested in using PWS security. It is more important to them that the warning service is easily available and that the UE can process the warning message even if this could lead to receiving a forged warning message. In this situation, any warning message, signed or not, is expected to be processed by the UE. This creates discrepancy with other countries in which authorities and/or mobile network operators consider PWS security a critical feature.

In addition, introduction of PWS security may be gradual at a global scale. Some countries may deploy PWS without security as a first step.

In the context described above, mobile operators providing PWS and/or PWS security may wish that UEs adapt their behavior according to the local PWS settings (henceforth named PWS Status Information, or PSI), for example, whether PWS and/or PWS security is in use or not, possibly along with preconfigured policies, so that their subscribers can still benefit from PWS and/or PWS security while roaming in a visited network (VN).

An example of such a policy that seems reasonable is given in the following:
"The UE shall discard all unsigned warning messages in VNs that support PWS security, and accept unsigned warning messages in VNs that support PWS, but not PWS security."

This policy takes a pragmatic approach with regard to PWS security: accept the additional protection afforded by PWS security when it is available, and give priority to the benefit of genuine warning messages otherwise.

However, leaving the roaming UE determine by itself the status of PWS security from PSI in the VN leaves room for an attacker to provide such roaming UE with false PSI (recall that such information is sent over the unsecured CBS or in a signalling message that may lack integrity protection like in GSM or GPRS). Note that the UE does not initially know the PWS status of the VN when roaming.

Namely, in cases where it was not possible to securely provide the PSI of the VN to the UE, an attacker could pretend that the VN uses PWS without security. If an attacker then sends unsigned warning messages, the UE would process a forged unsigned warning message, if the UE is configured to accept unsigned warning messages in countries where no PWS security is enabled, even though the visited network would distribute genuine warning messages only with a signature.

Hence, currently existing systems are vulnerable to attacks in which a forged warning message is distributed, for example in an attempt to create panic among the population.

Hence, it is an objective of this invention to improve public warning systems in this regard regardless of the mobile communication environment in which they are applied, thus covering all 3GPP systems, including GSM.

### Summary

The presented invention is, in brief and according to at least some aspects thereof, about reliably mapping and/or (otherwise) provisioning the PSI of the VN to the UE, without depending on integrity protection provided by the VN, and in case of absence of PSI VN data, reliably stating this information to the UE.

Various exemplary embodiments of the invention are set out in the claims and aim at addressing at least part of the above issues and/or problems and drawbacks.

According to a first aspect of the present invention, there is provided
an apparatus as set out in claim 1 and a method as set out in claim 8.

Advantageous further developments are as set out in respective dependent claims in relation to each of the above aspects.

According to a further aspect of the present invention, there are provided computer program products, as set out in claim 15, comprising computer-executable components which, when the program is run on a computer, are configured to implement and/or carry out the above method aspects. Those computer program product/products may be embodied as a computer-readable storage medium.

Thus, the invention resides in methods, apparatuses and computer program products according to at least one or more embodiments covered by the above aspects.

For example, by virtue thereof, at least one or more of the following advantages are achieved:
- aspects of the invention provide the UE with a secure and reliable means of obtaining PSI for a VN (and also for a HN), and a policy how to react in specific settings,
- the UE is made aware in a reliable manner what it should expect in a VN with regard to a PWS being present in the VN, i.e. whether the PWS in the VN is used with or without security and/or whether there is a PWS at all in use;
- this is particularly useful for roaming devices moving from the home network to a variety of visited networks;
- attack attempts are mitigated, as "target devices" (of a fraud PWS) typically do not know in advance the status of PWS in a VN;
- information on a PWS status in a VN comes (originates) from or is bound to the HN, thereby representing reliable information (because the HN is seen as trustworthy by the UE);
- a secure means of providing the PWS status information (PSI) of the VN to the UE is presented;
- a solution is presented which works even for a visited network operated under GSM;
- an aspect of the solution according to the present invention does not depend on integrity protection provided by the visited network;
- the UE knows what kind of behavior of the VN with respect to PWS it can expect; this is a real advantage as PWS security will be enabled in some networks or countries, but not in others;
- it is prevented that an attacker can render PWS security in a network or a country useless by setting up a false base station over which the attacker sends unprotected false warning messages and making the UE believe that the network or country does not support PWS security;
- the UE is enabled to recognize such fraud and to discard such false warning messages in case it knows from the PSI provided to the UE (as an aspect of the invention) that PWS security is indeed enabled in that network or country and, hence, unprotected warning messages would not be admissible;
- it allows the use of fine-grained policies in the UE depending on the PWS status information received (or not received);
- it is enabled to prevent a roaming UE, which has successfully registered with a VN, from receiving false PSI of the VN;
- the UE - depending on its policy (set e.g. preferably by the HN operator, but possibly also by the user) - decides to ignore or to process a warning message that it received signed or unsigned, possibly additionally dependent on the content of the message.

### Brief description of drawings

For a more complete understanding of example embodiments of the present invention, reference is now made to the following descriptions taken in connection with the accompanying drawings in which:
Figure 1 illustrates an overview of some entities and some information involved in relation to aspects of the invention;
Figure 2 illustrates a schematic flowchart according to aspects of the invention in relation to a terminal behavior;
Figure 3 illustrates an example of a respective basic block circuit diagram of an entity, a terminal such as a UE or a MS, according to at least aspects of the invention.

### Description of exemplary embodiments

Examples of aspects of the invention will be described herein below.

It will become clear for the person skilled in the art, that the embodiments provided in the present document are exemplary, and that the invention may be applied to other mobile systems where similar problems arise.

In various standards, different names may apply for entities or devices involved. Therefore, as a mere example only that was chosen to describe a possible implementation framework of the present invention, reference is e.g. made to LTE™ and/or GSM and related documentation thereof, and/or to terminology that is at least to a certain extent also used in TR 33.869. Abbreviations and definitions as set out in such documents/context shall also apply for the purpose of describing at least concepts /embodiments of this invention, though those are not intended to limit the applicability of those concepts / embodiments to other telecommunication environments.

Any reference to LTE, LTE-A, UMTS, GSM or the like or to IP based networks or an evolved packet system, EPS, network deploying a PWS of any kind is a mere example only and not limiting the applicability of the present invention. Insofar, the present invention relates in particular but without limitation to any PWS deployed in any mobile communication environments, for example to environments under LTE™ (Long Term Evolution) or LTE™-A (LTE™ Advanced), or any other communication scenario such as UMTS (Universal Mobile Telecommunication System) or GSM (Global Standard of Mobile Communication), potentially standardized by 3GPP (3^{rd} Generation Partnership Project), ETSI (European Telecommunication Standards Institute) and/or other local or regional standardization bodies e.g. NGMN (Next Generation Mobile Networks). At least one or more individual aspects of the invention can advantageously be implemented as or in chipsets, or modules, or units, or apparatuses of devices. More particularly, as a specific example referred to in order to describe aspects of the present invention, the present invention relates to those apparatuses / units of devices or network entities or terminals that are applied in such communication networks or a part thereof.

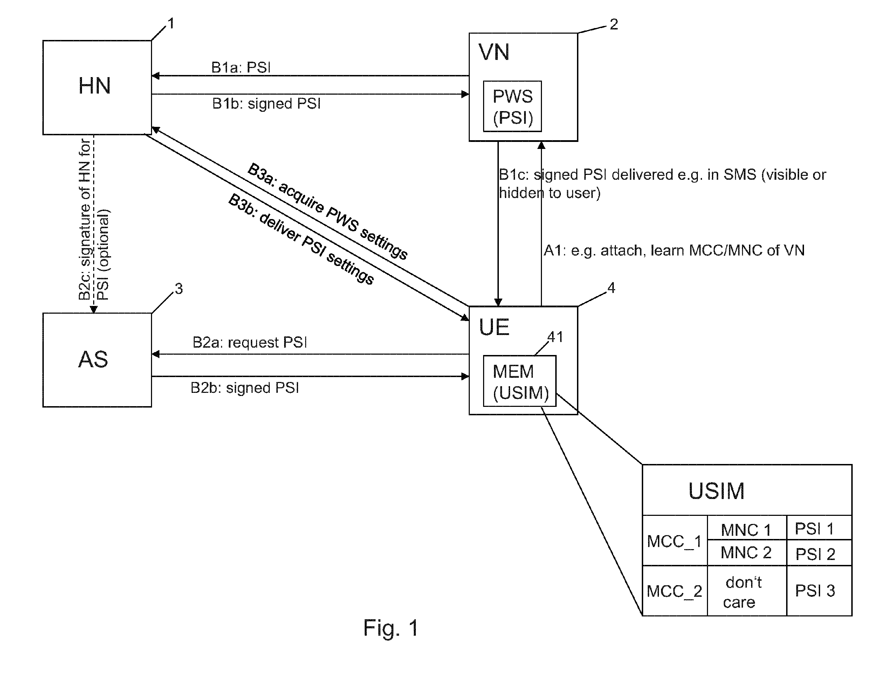

Fig. 1 illustrates an overview of some entities and some information involved in relation to at least some aspects of the invention. Without going into further detail of the internal construction of respective entities, Fig. 1 shows a home network HN denoted by numeral 1, a visited network VN denoted by numeral 2, an application server AS denoted by numeral 3, and a terminal such as a user equipment UE denoted by numeral 4. Illustrated in Fig. 1 is a scenario in which the visited network VN 2 comprises a message system such as a public warning system PWS deployed within that visited network. Of course, other UEs may regard the visited network VN 2 as their home network HN and the home network HN 1 as a visited network. Furthermore, plural networks are present in a same geographical area in parallel. The PWS of the visited network is illustrated to have information on its status denoted as PSI, i.e. PWS status information.

According to various aspects and/or scenarios, such PSI information on a status of the message system deployed within the visited networks needs to be obtained by the UE. As illustrated by an arrow labeled A1, the terminal may derive the information on the status of the message system by mapping an identifier of the visited network, for example upon attaching to that network, to a list of status information of a plurality of networks which list is maintained in the memory 41 of (or associated thereto to be accessible by) the terminal, e.g. UE 4. Namely, for example upon attach of the terminal to the network, or upon other triggering conditions for the terminal within the network such as a tracking area update or a routing area update or similar, the terminal learns the mobile country code or mobile network code of the visited network VN 2. This identifier can be mapped to derive information on the status of the message system (PSI of PWS) to a list of status information of a plurality of networks maintained in the memory, which for example is represented by a USIM module or memory module of the terminal. As shown in Fig. 1, in the example, the USIM contains two country codes MCC_1 and MCC_2. For MCC_1, two mobile network codes MNC 1 and MNC 2 are provisioned. For each such combination MCC_1 and MNC 1, status information PSI 1 is allocated, while for MCC_1, MNC 2, status information PSI 2 is allocated. Furthermore, a country code MCC_2, independent of any network code, PSI 3 is allocated. This means that in a country identified by MCC_2, all networks are assigned the same status of the message system.

Furthermore, in order to obtain information on the status of the message system, the control unit of the terminal is further configured to receive the information on the status from the visited network 2, as denoted by arrow B1c in Fig. 1. Such information on the status (PSI) has beforehand been signed by a home network of the terminal, as indicated by arrows B1a and B1b in which the PSI of the visited network is sent to the home network, verified or validated by the home network and returned in a reliable way to the visited network. The signaling used, for example, in relation to signaling B1c can be an SMS, visible or invisible for a user of the user equipment, and can be triggered e.g. by authentication of the terminal/registration of the terminal to the visited network VN or other triggering conditions prevailing for the terminal within the network.

Note that throughout the document any reference to a "signed" PSI (as an example implementation) may equally be understood as a verified or validated PSI that is provided to the UE in a secure and reliable manner where the manner of provisioning is not limited to signaling B1c from Fig. 1.

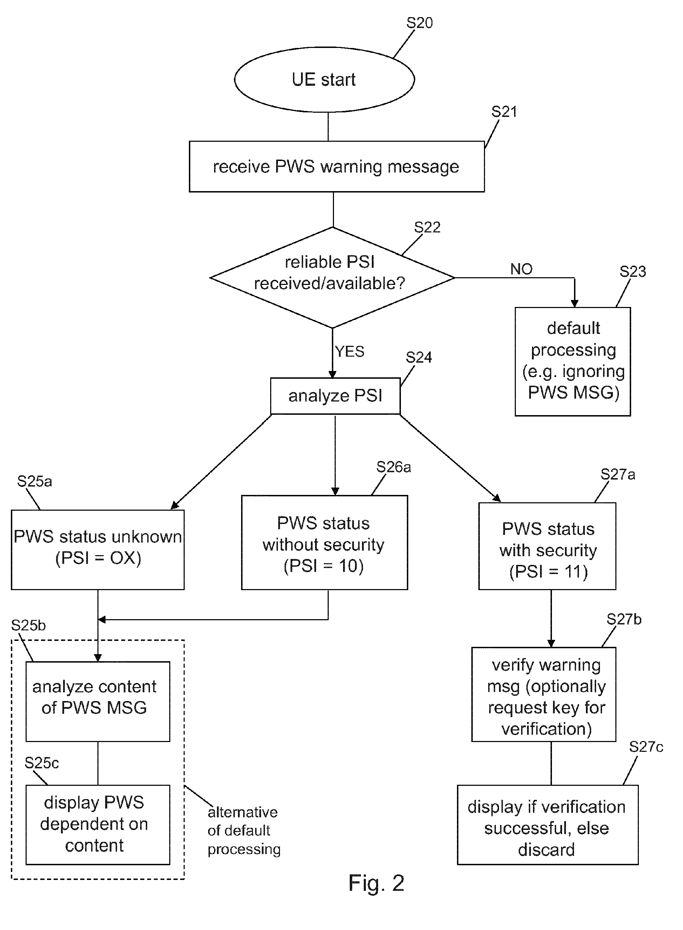

Furthermore, as shown by arrows labeled B3a and B3b, the terminal may in one option request the information on the status of one or more networks from its home network, and subsequently store that information upon receipt in its memory. Furthermore, according to another option, in order to obtain information on the status of the message system, the control unit or terminal is further configured to request the information on the status of the network from a dedicated entity such as an application server denoted by 3. Responsive to such request (see arrow B2a in Fig.2), the terminal receives (B2b) a signed (or otherwise verified or validated) PSI. The signature on the PSI may optionally be provided by the home network which may have delivered in a signaling B2c the PSI signed (verified/validated) by the home network to the application server.

While the basic entities involved in relation to at least aspects of the present invention and some basic signaling have been described herein above with regard to Fig. 1, Fig. 2 will subsequently be described with regard to a behavior of the UE.

Fig. 2 illustrates a schematic flow chart according to aspects of the invention in relation to the terminal behavior, i.e. the processing performed at the UE. The process starts in a stage S20 for the UE. In a stage S21, a message of the message system is received, i.e. a warning message of the public warning system PWS is received. Subsequently, in a stage S22, it is checked whether reliable PSI information, i.e. information on a status of the message system, is available or has been received. (Of course, PSI could be received even without a warning message beforehand being received, e.g. as a configuration detail of the VN.) If not, NO in S22, the process advances to stage S23 and the default processing for the received PWS warning message is performed. For example, according to an option in such scenario, any PWS messages are ignored. If PSI is available, YES in S22, the process advances to stage S24 in which the PSI is analyzed. If analysis of the PSI in stage S24 reveals that the PWS status is indicated by the PSI to be unknown (for example in a two bit coding, the first bit is zero and the second bit is of no further interest then), a default processing as in S23 can be performed, or an alternative default processing can be performed. That is, subsequent to stage S25a revealing a PWS status (PSI) as unknown, in a stage S25b the content of the PWS message is analyzed. Then, in a stage S25c, the PWS message is (e.g. based on a configured default policy) displayed dependent on the content. For example, in order to prevent panic situations to occur among users of terminals within the visited network, in such scenario earthquake or tsunami message would be suppressed while weather notifications could still be displayed. Note that the alternative default processing of stages S25b and S25c may also optionally be applied as a default processing in stage S23. Likewise, this processing could be applicable in case the PWS status is analyzed in stage S24 and reveals in stage S26a that the PWS status is a status without security (e.g. in a two bit PSI coding, PSI would be 10). A way of deciding on how to process warning messages at the UE is referred to as "policy". A respective default policy may be present for a state of "PSI not available" and also for "PSI unknown". The default policies may be identical for those states or differ in some aspect. Further, there may be respective (different) policies for situations in which PSI denotes "without security" and "with security".

Furthermore, in case as a result of analyzing the PSI in stage S24, it is revealed in stage S27a that the PWS status denotes "with security" (PSI = 11 in a possible coding), the process proceeds to stage S27b and the received warning message is verified. If no key for verification is available at the UE, this may represent a triggering condition to request a key for verification, e.g. from the home network or another entity. That is, if a UE receives a warning message for which it would need a public key to verify the signature: either it has it received beforehand (e.g. using the NAS-based approach), it needs to request it (e.g. using the GBA-based approach), it receives it in a separate message (e.g. using the certificate approach, or it receives it with the warning message (e.g. using the implicit certificate approach) or it would need to get it, if not yet received.

Upon successful verification of the signature on the warning message, as indicated in stage S27c, the PWS warning message is displayed or notified to the user of the terminal, or, in case the verification was unsuccessful, it is discarded.

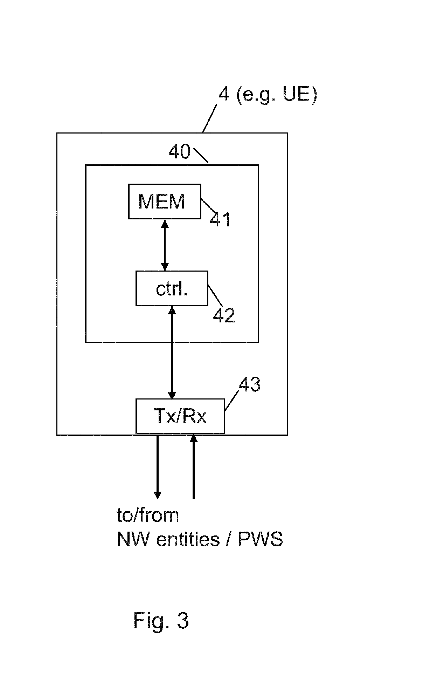

Although throughout this document reference has been frequently made to displaying message of the PWS system, e.g. in the form of text messages such as SMS, any kind of notification of the message is of course possible. For example, a special ringing tone or other audible alert could be issued to the user or a speech-out could be generated reading out the warning message. To this end, apart from the entities illustrated in Fig. 3, a terminal such as a user equipment is also equipped with a man machine interface MMI (not shown in Fig. 3) which is also under control of the controller. The PWS warning message could optionally or additionally also be output and notified e.g. by vibrations to the user.

Hence, the above description of Fig. 2 illustrates that the control unit of the terminal is further configured to apply a default processing for the messages received from the message system in case that no status information could be obtained, while in case that status information could be obtained, a selective processing for the messages received from the message system is applied dependent on the status information once the status information has been analyzed.

Similar notions as made above with reference to one or more apparatus related aspects apply likewise to correspondingly related method aspects and similar notions as made above with reference to one or more method aspects apply likewise to correspondingly related apparatus aspects.

Figure 3 shows, supplementing the above description of aspects of the invention, a basic block circuit diagram of e.g. a terminal in which embodiments of the present invention are implemented. Thus, the entity 4 can be any kind of terminal such as a user equipment UE or a mobile station MS. The entity, denoted by numeral 4, comprises an interface, Tx/Rx, cf. numeral 43, for transmission to / reception from network entities of a home (HN) and/or visited (VN) network, and/or an application server AS. The interface is bidirectional connected to a control module or unit such as a processor, e.g. a digital signal processor, DSP, or ASIC (ASIC = application specific integrated circuit), CPU (central processing unit), or the like, denoted by numeral 42. The control module or unit (aka controller) is bidirectional connected to a memory module or unit (aka memory) MEM, denoted by numeral 41. The memory module can be any type of memory to which data can be written and from which data can be read, e.g. a Flash memory, RAM (Random Access Memory), or also EPROM (Electrically Programmable Read Only Memory).

In at least an implementation, the memory may be embodied as a SIM module or USIM module of the terminal or such SIM/USIM may at least access the (separately provisioned) memory.

The memory module is configured to store at least data necessary for implementation of the invention, e.g. control code, acquired and/or processed data to be used for implementing/realizing at least aspects of the invention. Thus, the memory module can be a (logically and/or spatially) separate memory module or a partition of a memory module storing also other user/control data handled by the entity. Other memory modules may be present, too, in the entity. Examples of the invention can be embodied in an apparatus or unit of the entity, e.g. denoted by numeral 40, comprising at least the modules 42 and 41 above.

Thus, as described in at least some aspects herein before, according to those or other aspects and/or related embodiments of the present invention, reliable information concerning a PWS (security) status of a visited network's PWS is provided to a terminal, e.g. from (or involving) the home network of the terminal.

The expression "reliable" as used herein is intended to denote trusted information in the sense that it could not have been altered by a fraudulent third party, which is not authorized to do so, and that it comes from a trustworthy source, as explained later. Status of a PWS may be another status as compared to the "security status" used herein as an example of status. In regard to a security status of the PWS as expressed by the PWS status information PSI, the status information may assume three values: unknown/not existing, unsecured, or secured. A higher number of statuses may be defined, e.g. in terms of one or more security levels, if desired.

The terminal, i.e. a UE or MS, receives such reliable information concerning a status (such as a security status) of a public information distribution system, herein exemplified by a public warning system, PWS. The terminal has also knowledge of (configured or received) policy information and processes information (e.g. warnings) received via the PWS according to the policy information and the status information. Aspects/embodiments of the invention are applicable to EPS networks, 3G and/or 2G networks or any other network deploying a public information distribution system such as a PWS.

Features at least offered by the invention, are:
(a) providing the UE with reliable information about the PWS status of the visited network,
(b) in case of absence of such information, providing reliable information that there is no PWS status of the VN available,
(c) providing a pre-specified behavior setting in the UE, which is used as a policy in case no reliable information according to (a) or (b) was received;
(d) means for the UE to enable comparison of any of this information with the behavior of the VN and to act depending on the settings.

This reliable information (PSI) comes from (or at least originates at) a source the UE trusts, e.g. the HN and is protected by a security association that exists between the UE and the trusted source, e.g the HN. It may be delivered by the HN, the VN, or sources other than the VN, e.g. an application server AS, or a cell broadcast entity CBE. A combination of reliable information and policy may be possible, which represents a completely novel feature for PWS.

The invention can be applied, at least in aspects thereof, to prevent a roaming UE, which has successfully registered with a VN, from receiving false information about the PWS status of the VN. That is, the UE could - depending on its policy (set preferably by the HN operator, but possibly also by the user) - decide to ignore or process a warning message that it received, signed or unsigned.

This is e.g. done by the HN network sending reliable information to the UE about the PWS status of the VN (possibly via VN) or by the UE requesting this information from the HN or from a reliable source other than the VN (e.g an application server AS).

Notifying the UE of the absence of such information allows the UE to know from a reliable source that the status is not known by the reliable source (e.g. by the HN) and that the information was not simply suppressed by an attacker (which cannot be completely prevented).

Thus, at least one basic aspect resides in that the UE, when registering at a VN - or even being in a limited service state (i.e. not able to camp on a cell in idle mode) with respect to a VN - , will receive reliable PWS status information (PSI) about the VN (or it will receive the information that this status information is not available) from (or originated at) its HN or another source. Furthermore, the UE has a policy that tells it how to act depending on the reliable PWS status information received or not received.

Insofar, aspects of the invention encompass, inter alia,
a provision of reliable information about the PWS status of the visited network that the UE can evaluate, and which allows to avoid receiving unsecured warning messages in a VN if the VN normally would use PWS security, as well as
a provision of information for the UE, if reliable information is available, and if not, using a pre-set policy how the UE should behave.

Note, it is also possible to treat the HN as the visited network, and supplying PSI of the HN to its UEs may be advantageous.

Several methods could be used for the above purposes, and herein some of those are illustrated as mere examples, as those could be regarded as the most relevant ones, e.g. in terms of standardization and/or deployment perspectives.

The measures outlined in relation to one or more aspects of the invention will counter the attack, in which an attacker does not intend to use the genuine PWS status of the visited network.

Those aspects may, if for explanatory purposes considered individually, be regarded as follows:

### Aspect A: (PWS status information (PSI) provisioning/generation)

The PWS status information would not have to specifically mention the VN. It would be sufficient if the PWS status of a VN could be derived from the PSI. The PSI could e.g. say that PWS security is enabled for all networks in country X, and, from the Mobile Country Code (MCC) of the VN, the UE could then derive that PWS security is enabled for the VN, if the MCC points to country X. Further, a PSI could be network-specific and be derived from a mobile network code MNC.

Generation of PWS status information (PSI) can exemplary result in a PSI being a flag with 2 bits (any other presentation is possible as well) containing the following information: PSI for the VN network exists/does not exist in HN (1/0); PWS is used with/without security (1/0); if the first bit is set to "0", i.e. PSI does not exist for the VN, the second bit need not be evaluated ("don't care"). Other ways of protecting and/or coding the PSI are of course possible.

Such PSI may differ per visited network, or is equal for all potentially visited networks within a country and may differ only for visited networks of different countries.

### Aspect B: (reliable PSI delivery)

In order for a PSI representing a reliable PSI, for example, a method is deployed to bind the PSI with security information which is only known by HN. For example, the PSI is digitally signed by a private key known only to the HN and the signature on the PSI is verified by the UE by means of a public key corresponding to the private key. Also, even in case no PWS security is in place, such information "PWS security not in place" will be reliably made available to the UE.

Subsequently, some example scenarios of delivery of such reliable PSI information to a UE in a visited network VN are outlined according to an aspect of the invention:

### Scenario #1:

For example, the HN could sign PSI of the VN that was previously made known to the HN by VN, e.g. in the roaming agreement, and provide it to the VN offline. (Note that this information is expected to be valid for a long period). The thus signed PSI could then be delivered to the UE in several ways:
- via the VN during the authentication or registration phase, or other network signaling procedures (e.g. Tracking Area Update TAU, or Routing Area Update RAU). By virtue thereof, the trustworthiness of the PSI is guaranteed by the signature of the HN, or another security association shared with the HN, not only by the integrity-protection mechanisms of the VN;
- the VN could add the signed PSI to its Welcome SMS, i.e. the SMS that every UE receives when roaming into a visited network. Although SMS is a well-known element, using of SMS for the specific security purpose as described above has not been disclosed or suggested (and defining rules for handling the information sent in the PWS context).

### Scenario #2:

The UE could request PSI from an application service: the application server of such service could use pull or push mode, and use various transport means, similar to what is described in TR 33.869, v0.3.0, clause 7.6, for the GBA-based approach. But the security between the U E and the application server would not necessarily be provided by GBA, but could also be provided by a digital signature by the HN on PSI.

### Scenario #3:

The UE could acquire from time to time, from an entity within its HN, a list of PWS settings of other countries and store this information. This list could e.g. be first delivered to the UE when the USIM is issued and then managed by the HN on the USIM e.g. via OTA management of the USIM. Storing a list of settings is a well-known element, though using this for the specific security purpose when roaming and defining rules for handling the information stored in the PWS context has not been disclosed or suggested.

### Scenario #4:

The UE could acquire from time to time, from an entity within its HN or any other reliable source, a list of PWS settings of other countries and store this information. This list could e.g. be pre-provisioned to the terminal or issued first time it is used, and managed by the HN e.g. via OMA DM (device management) of the ME.

### Scenario #5:

The HN sends (e.g. pushes) from time to time from an entity within the HN or any other reliable source, a list of PWS settings of other countries to the UE, which stores this information for example in the (U)SIM or memory of the UE or other storage media.

Under implementation considerations for one or more of the above scenarios, several ways for PSI delivery without allowing an attacker to forge PSI are possible, according to further aspects:

### 1) NAS message:

Include the (reliably, e.g. signed) PSI in an existing NAS signaling message, or use a new PWS NAS message. A new NAS message could be specially created for the purpose of delivering PSI or be one that also sends other information, e.g. the PWS public key. (Though, a PWS NAS message would be only sent if PWS is deployed in that network, otherwise the network would be unlikely to send such a PWS-related message.)

### 2) Application service:

### (cf. scenario #2 above)

The UE retrieves the PSI information from an application server, which is located e.g. in the HN or the VN: for transport means and push vs. pull, basically all the options mentioned in clause 7.6 of TR 33.869, could be used. E.g. if only CS (circuit switched) transport is enabled in the UE, then the UE e.g. sends an SMS requesting the status for a particular network, or an SMS could be pushed to the UE. For the security, either GBA-security (GBA approach) digital signatures verified by a HN or VN public key provisioned in the UE (certificate approach) could be used.

### 3) PSI signed by HN, made offline available to VN and then sent by the VN (cf. scenario #1 above); e.g. this could be done in a welcome SMS, i.e. an SMS that a UE receives when first registering in a VN.

### 4) same as 3), but a hidden SMS is used in the sense that an SMS is used to deliver a signed PSI that can be processed by the UE, but the SMS as such is not visible to the user.

### 5) new IE sent in a CBS SIB (Cell Broadcast Service System Information Block) message

If no such SIB is received, let the UE operates in line with item 2) herein above. This would take some load away from the application server compared to the case when always 2) is used.

### 6) pre-configured list in the (U)SIM or ME (cf. aspect A above)

A list that contains Mobile Country Codes (MCCs) and possibly also Mobile Network Codes (MNCs) each associated with a PSI.

### 7) list of PSI settings in (U)SIM or ME

As in 6), but the list in the (U)SIM is periodically (or upon UE request (periodically or event triggered)) updated by the HN, e.g. by means of OTA and/or USIM application toolkit (USAT) methods.
(cf. scenario #3 above)

### 8) certificate/implicit certificate approach - bind PSI with certificate

In the certificate-based approach, where the CBE is responsible to send with its warning message or in a separate certified message the public key, it could put PSI info in this trusted message. Then the trust is established via the CBE and not via the VN.

### Aspect C: (PWS message processing at a UE, possibly depending on a policy set in the UE)

As soon as the UE attaches to a VN and further receives a warning message, it compares the stored or reliably received PWS status information about the VN with the behavior of the VN with regard to PWS.

The UE evaluates a (reliably received) PSI in that it compares the PSI with network behavior when receiving a warning information. Namely, for example, in case the UE has received a PSI with "11" (reliable info available, PWS in VN works with security, in line with above example coding) but has not yet received a public key for verifying a signed warning message, this flag can be also the indicator for actively requesting a CBE public key.

If the UE did not receive reliable accurate PWS status information about the VN, according to an aspect of the invention a pre-specified behavior setting in the UE is provisioned, i.e. depending on the HN PWS policy or the user preference. In the former, the HN sets in the UE, how the UE should behave in the VN with regard to PWS with/without security. In the latter, the user of the UE wants to decide itself on this and changes the policy configuration according to their wishes.

A more fine-grained policy for the case that the UE received reliable information that the VN does not support PWS security, or the UE did not receive any reliable information on the PSI of the VN, which would minimize damage, could also be that certain warning messages that are particularly prone to creating panic, e.g. earthquake and tsunami warnings, are not displayed, but others, e.g. traffic information or weather reports, may still be displayed.

### Policy for the UE, if no PSI has been sent:

In case no PSI was securely received by the UE, the UE is configured, according to an aspect, to behave according to a (preconfigured) policy, that preferably the HN operator has pre-set in the UE. The policy can be expressed for example by one or several flags set in the terminal or the (U)SIM. Any other implementation of a policy is possible. Normally, the home network operator can modify this policy, but maybe it would be also possible for a user to set his own preferences. Such policy may specify that, if no PSI was securely received by the UE, then the UE should not process any warning messages, or the policy could say that certain warning messages that are particularly prone to creating panic, e.g. earthquake and tsunami warnings, are not displayed, but others, e.g. traffic information or weather reports, may still be displayed.

Note that embodiments of the present invention may be implemented in software, hardware, application logic or a combination of software, hardware and application logic. The software, application logic and/or hardware generally resides on a module or unit, or chipset or apparatus associated to a device, i.e. mounted/inserted or mountable/insertable to or accessible by or configured as a part of such a device, such as a network entity, or a terminal or similar functionality.

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or smart phone, or user equipment.

If desired, the different functions discussed herein may be performed in a different order and/or concurrently with each other. Furthermore, if desired, one or more of the above-described functions may be optional or may be combined.

Although the above description focused on an algorithm aspect, it is to be understood that the algorithm is configurable to corresponding hardware or implemented as software code loaded to a processor.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The present invention proposes computer program claims, methods and apparatuses enabling to improve public warning systems, PWS, as an example of message systems deployed in a communication network. According to an aspect thereof, related to a terminal UE, there is provided an apparatus, which comprises a control unit (42), and a memory unit (41) connected to the control unit, wherein the control unit is configured to obtain (S22) information (PSI_1, PSI-2, PSI_3) on a status of a message system (PWS) deployed within at least one network (2) in which the apparatus (4) is enabled to communicate, receive (S21) a message from the message system within said at least one network, and process (S23-S27) said message dependent on the information on the status of the message system. Corresponding methods and computer program products are likewise encompassed.

**List of some acronyms and abbreviations as used herein above:**

| | |
|---|---|
| 2G | 2^{nd} Generation (network) |
| 3G | 3^{rd} Generation (network) |
| 3GPP | 3^{rd} Generation Partnership Project |
| AS | Application Server |
| CBE | Cell Broadcast Entity |
| CBS | Cell Broadcast Service |
| CMAS | Commercial Mobile Alert System |
| CS | Circuit Switched |
| CPU | Central Processing Unit |
| EPS | Evolved Packet System |
| ETWS | Earthquake& Tsunami Warning System |
| EU Alert | European Union Alert |
| GBA | Generic Bootstrapping Architecture |
| GSM | Global System of Mobile Communication |
| HN | Home Network |
| KPAS | Korean Public Alert System |
| LTE | Long Term Evolution |
| LTE-A | LTE Advanced |
| MCC | Mobile Country Code |
| ME | Mobile Equipment |
| MNC | Mobile Network Code |
| MS | Mobile Station |
| NAS | Network Access Stratum |
| OTA | Over The Air |
| PSI | PWS Status Information |
| PWS | Public Warning System |
| RAN | Radio Access Network |
| RAU | Routing Area Update |
| SA3 | Services & Architecture Working Group 3 |
| SIB | Service Information Block |
| TAU | Tracking Area Update |
| TR | Technical Report |
| TS | Technical Specification |
| UE | User Equipment |
| UMTS | Universal Mobile Telecommunication System |
| USAT | USIM Application Toolkit |
| USIM | Universal Subscriber Identity Module |
| UTRAN | Universal Terrestrial RAN |
| VN | Visited Network |
| WG | Working Group |

## Claims

1. An apparatus, comprising
a control unit (42), and
a memory unit (41) connected to the control unit,
wherein the control unit is configured to
obtain (S22) information (PSI_1, PSI-2, PSI_3) on a status of a message system (PWS) deployed within at least one network (2) in which the apparatus (4) is enabled to communicate,
receive (S21) a message from the message system within said at least one network, and
process (S23-S27) said message dependent on the information on the status of the message system.

2. An apparatus according to claim 1, wherein
in order to obtain information on the status of the message system, the control unit is further configured to
derive (A1) the information on the status of the message system by mapping an identifier (MCC_1, MCC_2, MNC_1, MNC_2) of the at least one network (2), upon attach to that network, to a list of status information of a plurality of networks maintained in the memory (41).

3. An apparatus according to claim 1, wherein,
in order to obtain information on the status of the message system, the control unit is further configured to
receive (B1c) the information on the status from the network (2), wherein the information on the status has been signed (B1a, B1b) by a home network (1) to which the apparatus is associated.

4. An apparatus according to claim 1, wherein,
in order to obtain information on the status of the message system, the control unit is further configured to
obtain (B3a) the information on the status of one or more networks, from a home network (1) to which the apparatus is associated, and
store the information upon receipt (B3b) to the memory (41) of the apparatus.

5. An apparatus according to claim 1, wherein,
in order to obtain information on the status of the message system, the control unit is further configured to
request (B2a) the information on the status of the network from a dedicated entity (3), and
receive (B2b) the information on the status from the dedicated entity with a signature, wherein the signature is optionally associated (B2c) to a home network (1) to which the apparatus is associated.

6. An apparatus according to claim 1, wherein
the control unit is further configured to
in case that no status information could be obtained,
apply a default processing for the messages received from the message system.

7. An apparatus according to claim 1, wherein
the control unit is further configured to
in case that status information could be obtained,
analyze (S24) the status information, and
apply a selective processing (S25, S26, S27) for the messages received from the message system dependent on the status information.

8. A method, comprising
obtaining (S22) information (PSI_1, PSI-2, PSI_3) on a status of a message system (PWS) deployed within at least one network (2) in which an apparatus (4) is enabled to communicate,
receiving (S21) a message from the message system within said at least one network, and
processing (S23-S27) said message dependent on the information on the status of the message system.

9. Method according to claim 8, wherein
obtaining information on the status of the message system further comprises
deriving (A1) the information on the status of the message system by mapping an identifier (MCC_1, MCC_2, MNC_1, MNC_2) of the at least one network (2), upon attach to that network, to a list of status information of a plurality of networks maintained in a memory (41).

10. A method according to claim 8, wherein,
obtaining information on the status of the message system further comprises
receiving (B1c) the information on the status from the network (2), wherein the information on the status has been signed (B1a, B1b) by a home network (1) to which the apparatus is associated.

11. A method according to claim 8, wherein,
obtaining information on the status of the message system further comprises
obtaining (B3a) the information on the status of one or more networks, from a home network (1) to which the apparatus is associated, and
store the information upon receipt (B3b) to the memory (41) of the apparatus.

12. A method according to claim 8, wherein,
obtaining information on the status of the message system further comprises
requesting (B2a) the information on the status of the network from a dedicated entity (3), and
receiving (B2b) the information on the status from the dedicated entity with a signature, wherein the signature is optionally associated (B2c) to a home network (1) to which the apparatus is associated.

13. A method according to claim 8, further comprising
in case that no status information could be obtained,
applying a default processing for the messages received from the message system.

14. An apparatus according to claim 8, further comprising
in case that status information could be obtained,
analyzing (S24) the status information, and
applying a selective processing (S25, S26, S27) for the messages received from the message system dependent on the status information.

15. A computer program product comprising computer-executable components which, when the program is run on a computer, are configured to perform the method steps according to any of claims 8 to 14
